# EUROPÄISCHE PATENTANMELDUNG

(11) **EP 4 647 330 A1**
(43) Veröffentlichungstag der Anmeldung: **12.11.2025**
(21) Anmeldenummer: 25171135.4
(22) Anmeldetag: 17.04.2025
(51) Int. Cl.: B62M 9/02, F16H 7/02, F16H 55/17, F16H 55/36, F16G 1/28

(54) **ZAHNRIEMENSCHEIBE MIT VERBESSERTEM EINGRIFF SOWIE RIEMENTRIEB, FAHRRAD UND BAUSATZ**

(30) Priorität: 08.05.2024 DE 102024113010
(71) Anmelder: Nicolai, Karlheinz, 31089 Duingen Lübbrechtsen (DE)
(72) Erfinder: Nicolai, Karlheinz, 31089 Duingen Lübbrechtsen (DE)
(74) Vertreter: Grünecker Patent- und Rechtsanwälte PartG mbB

(57) **Zusammenfassung**

Die Erfindung betrifft eine Zahnriemenscheibe (1) für einen Zahnriemen (2) mit einer vorgegebenen Teilung (4), wobei die Zahnriemenscheibe entlang einer Umfangsrichtung (8) der Zahnriemenscheibe angeordnete Zähne (6) sowie in Umfangsrichtung zwischen jeweils benachbarten Zähnen der Zahnriemenscheibe angeordnete Nuten (10) aufweist, und wobei die Zahnriemenscheibe eine Teilung (12) aufweist, die kleiner ist als die Teilung des Zahnriemens. Gegenstand der Erfindung ist ferner ein Riementrieb (70) mit einer Zahnriemenscheibe und einem Zahnriemen sowie ein Bausatz (84) für einen Riementrieb mit wenigstens zwei Zahnriemenscheiben für denselben Zahnriemen vorgegebener Teilung. Schließlich ist ein Fahrrad (76) mit einer erfindungsgemäßen Zahnriemenscheibe und/oder einem erfindungsgemäßen Riementrieb vorgeschlagen. Die erfindungsgemäßen Mittel machen Fahrräder zuverlässiger und sicherer.

## Beschreibung

Im Folgenden ist eine Zahnriemenscheibe für einen Zahnriemen mit einer vorgegebenen Teilung sowie ein Riementrieb mit einer Zahnriemenscheibe und einem Zahnriemen beschrieben. Gegenstand ist ferner ein Bausatz für einen Riementrieb mit wenigstens zwei Zahnriemenscheiben für denselben Zahnriemen vorgegebener Teilung. Schließlich ist ein Fahrrad mit einer erfindungsgemäßen Zahnriemenscheibe und/oder einem erfindungsgemäßen Riementrieb vorgeschlagen.

Bei Fahrrädern, insbesondere bei elektrisch unterstützten Fahrrädern, finden zunehmend Zahnriementriebe Anwendung. Zahnriemen und Zahnriemenscheibe sind für gewöhnlich aufeinander abgestimmt und weisen dieselbe Teilung auf. Bei Zahnriementrieben kann es, insbesondere bei wenig verwindungssteifen Fahrradrahmen und bei hohen Antriebsmomenten, zu Eingriffsstörungen des Zahnriemens kommen, also einem nicht ordnungsgemäßen Ineinandergreifen der Verzahnungen von Zahnriemenscheibe und Zahnriemen.

Die gleiche Problemstellung findet sich auch in weiteren Anwendungen wie zum Beispiel Motorrädern oder anderen leichten Fahrzeugen. Immer wenn ein Zahnriementrieb insbesondere an einem nachgiebigen Rahmen oder Gestell befestigt ist, kann es unter Last zu Veränderungen des Achsabstandes und zu einem stark durchhängenden Leertrum kommen. Beim Einlaufen des Riemens in die Zahnriemenscheibe entstehen die Eingriffsstörungen.

Derartige Eingriffsstörungen können zu Verletzungen des Radfahrenden führen, da er auf einmal unerwartet ins Leere tritt. Außerdem steigt die Gefahr von Belastungsspitzen im Riemen, die zum Bruch des Riemens führen können.

Es stellt sich folglich insbesondere die Aufgabe, Fahrräder mit Riementrieb zuverlässiger und sicherer zu machen.

Diese Aufgabe wird gelöst durch eine Zahnriemenscheibe für einen Zahnriemen mit einer vorgegebenen Teilung, wobei die Zahnriemenscheibe entlang einer Umfangsrichtung der Zahnriemenscheibe angeordnete Zähne sowie in Umfangsrichtung zwischen jeweils benachbarten Zähnen der Zahnriemenscheibe angeordnete Nuten aufweist, und wobei die Zahnriemenscheibe eine Teilung aufweist, die kleiner ist als die Teilung des Zahnriemens.

Überraschenderweise lassen sich mit einer Zahnriemenscheibe dieser Ausgestaltung Eingriffsstörungen des Zahnriemens im Betrieb von Fahrrädern zuverlässig verhindern. Bei Laboruntersuchungen hat sich herausgestellt, dass die Zähne der Zahnriemen bei einer Verwindung des Fahrradrahmens Schwierigkeiten haben, ordnungsgemäß in die Nuten einer herkömmlichen Zahnriemenscheibe einzutauchen. Infolgedessen kommt es insbesondere am Einlauf der Zahnriemenscheibe dazu, dass ein Zahn des Zahnriemens an einem Zahn der getriebenen Zahnriemenscheibe hochläuft und schließlich überspringt. Ursache hierfür scheint zu sein, dass die Zahnriemenscheiben des Riementriebs bei einer Verwindung des Rahmens nicht mehr exakt miteinander fluchten und zusätzlich der Achsabstand, der für einen Zahnriemenantrieb nach dem Stand der Technik vorgeschrieben ist, nicht eingehalten werden kann. Es findet unter anderem eine Verkürzung des Achsabstands statt, die zur Folge hat, dass der Leertrum nicht mehr in einer Geraden verläuft, sondern sich bogenförmig ausbildet. Durch den unzulässigen bogenförmigen Einlauf des Zahnriemens in die angetriebene Zahnriemenscheibe entsteht die Eingriffsstörung, die zu einem ungewollten Überspringen des Riemens auf der angetriebenen Zahnriemenscheibe führt.

Mit einer wie oben ausgestalteten Zahnriemenscheibe kann überraschenderweise eine solche Eingriffsstörung vermieden werden. Die vorgeschlagene Lösung verbessert das Ineinandergreifen von Zahnriemen und Zahnriemenscheibe auch bei hohen Antriebsmomenten und bei sich verwindendem Rahmen, wenn sich die relative Ausrichtung und/oder Position der beiden Zahnriemenscheiben des Zahnriementriebs verändert. Dies ist insofern von Bedeutung, als Zahnriementriebe zunehmend bei Fahrrädern mit langem Hinterbau und/oder bei hohen Belastungen, beispielsweise Lastenrädem, bei vollgefederten Rahmen oder S-Pedelecs eingesetzt werden. Die erfindungsgemäße Lösung ermöglicht den Einsatz leichter und wenig verwindungssteifer Rahmen auch bei hohen Antriebsleistungen, wie sie von Fahrrädern mit Hilfsantrieb bereitgestellt werden können. Bereits durch eine einzige wie oben ausgestaltete Zahnriemenscheibe wird der Zahnriementrieb toleranter gegenüber Verwindungen und Verkürzungen des Rahmens.

Die obige Lösung kann durch die folgenden jeweils für sich vorteilhaften, voneinander unabhängigen und beliebig miteinander kombinierbaren Merkmale weiter verbessert werden.

Die Teilung der Zahnriemenscheibe kann als Kreisbogenlänge auf einem Wirkkreisdurchmesser bzw. in Umfangsrichtung einer den Wirkkreisdurchmesser aufweisenden Wirklinie gemessen bzw. bestimmt sein. Der Wirkkreisdurchmesser kann durch Addition eines (tatsächlichen) Kopfkreisdurchmessers der Zahnriemenscheibe und eines doppelten Wirklinienabstands errechnet werden. Der Wirklinienabstand kann durch die technische Bauart des Riemens vorgegeben sein. Die Wirklinie kann sich entlang einer Zugfaser des Zahnriemens erstrecken bzw. dieser entsprechen.

Die Teilung der Zahnriemenscheibe kann gemäß einer Ausgestaltung um einen Teilungskorrekturwert kleiner sein als die (vorgegebene) Teilung des Zahnriemens. Der Teilungskorrekturwert kann dabei von wenigstens einem die Profilgeometrie des Zahnriemens und/oder die Profilgeometrie der Zahnriemenscheibe bestimmenden bzw. charakterisierenden Parameter abhängen. So kann der Teilungskorrekturwert beispielsweise von wenigstens einem Parameter aus der Gruppe von Parametern umfassend einen Kopfkreisdurchmesser der Zahnriemenscheibe; die Teilung der Zahnriemenscheibe; die vorgegebene Teilung des Zahnriemens; einen vorgegebenen Abstand des Zahnriemen-Zahngrundes von einem Zugstrang des Zahnriemens; und eine Zahnhöhe des Zahnriemens abhängen. Selbstverständlich kann die Gruppe von Parametern noch weitere Parameter umfassen. Beispielsweise kann der Teilungskorrekturwert noch von der Zähnezahl der Zahnriemenscheibe und/oder dem Umschlingungswinkel abhängen.

Der Zahnriemen kann gemäß einer Norm, insbesondere nach der Norm ISO 13050 ausgestaltet sein. Unter der Norm ISO 13050 kann die Version ISO 13050: 2022 verstanden sein. In der gesamten Schrift beinhaltet ein Bezug auf die Norm ISO 13050 einen Bezug auf die das Profilsystem H betreffenden Abschnitte bzw. Kapitel der Norm ISO 13050.

Als besonders vorteilhaft zur Vermeidung von Eingriffsstörungen hat sich erwiesen, wenn die Teilung der Zahnriemenscheibe in einer vorteilhaften Ausgestaltung um wenigstens 0,5% und höchstens 2,5% der Teilung des Zahnriemens kleiner ist als die Teilung des Zahnriemens. Weiter vorzugsweise kann die Teilung der Zahnriemenscheibe um wenigstens 1,0% und höchstens 2,0% der Teilung des Zahnriemens kleiner sein als die Teilung des Zahnriemens.

Gemäß einer weiteren vorteilhaften Ausgestaltung, die zuverlässig Eingriffsstörungen vermeidet, kann die Teilung der Zahnriemenscheibe zwischen etwa 97,5% und 99,5%, weiter vorzugsweise zwischen etwa 99% und 98% der Teilung des Zahnriemens betragen. Unter dem Begriff "etwa" kann eine Abweichung von 10% verstanden sein. Mit den Teilungen können oben die numerischen Werte für die Teilungen gemeint sein.

Um die gegenüber der Teilung des Zahnriemens verringerte Teilung der Zahnriemenscheibe auf konstruktiv einfache Weise umzusetzen, kann die Zahnriemenscheibe gemäß einem vorteilhaften Ausführungsbeispiel einen (tatsächlichen) Kopfkreisdurchmesser aufweisen, der kleiner ist als der durch die Profilgeometrie des Zahnriemens vorgegebene Kopfkreisdurchmesser. Für den Begriff "Kopfkreisdurchmesser" können synonym die Begriffe "Laufdurchmesser" oder "Außendurchmesser" verwendet sein.

Der durch die Profilgeometrie des Zahnriemens vorgegebene Kopfkreisdurchmesser kann von einem Standard und/oder einer Norm vorgegeben sein. Insbesondere kann der durch die Profilgeometrie des Zahnriemens vorgegebene Kopfkreisdurchmesser durch die Norm ISO 13050 vorgegeben sein und/oder dem Kopfkreisdurchmesser einer nach der Norm ISO 13050 dimensionierten Zahnriemenscheibe entsprechen. Die Zahnriemenscheibe, die den durch die Profilgeometrie vorgegebenen Kopfkreisdurchmesser aufweist, kann nach dem gleichen Standard und/oder gemäß der gleichen Norm, beispielsweise nach ISO 13050, ausgestaltet sein wie der Zahnriemen mit der vorgegebenen Teilung, mit dem die erfindungsgemäße Zahnriemenscheibe bestimmungsgemäß verwendet ist oder werden soll.

Damit die Breite der Nuten trotz der gegenüber der Teilung des Zahnriemens verringerten Teilung der Zahnriemenscheibe nicht verkleinert wird, können die Zähne der Zahnriemenscheibe gemäß einer vorteilhaften Ausgestaltung wenigstens abschnittsweise entlang der Umfangsrichtung weniger breit sein als die durch die Profilgeometrie des Zahnriemens vorgegebenen Zähne.

Unter der Breite einer Nut oder eines Zahnes ist hierbei eine Erstreckung in Umfangsrichtung zu verstehen. Die (tatsächliche) Breite in Umfangsrichtung der Zähne der Zahnriemenscheibe und die (theoretische) Breite in Umfangsrichtung der durch die Profilgeometrie des Zahnriemens vorgegebenen Zähne können dabei auf Höhe des gleichen Radius bzw. Durchmessers bestimmt sein.

Um den Zähnen des Zahnriemens das Eintauchen in die Nuten der Zahnriemenscheibe und damit den Eingriff zu vereinfachen, können die Nuten der Zahnriemenscheibe eine Breite in Umfangsrichtung aufweisen, die wenigstens im Bereich der Zahnfüße der Zähne der Zahnriemenscheibe größer ist als eine durch die Profilgeometrie des Zahnriemens vorgegebene Breite der Nuten.

Der Vergleich der (tatsächlichen) Breite der Nuten der Zahnriemenscheibe mit der durch die Profilgeometrie des Zahnriemens (theoretisch) vorgegebenen Breite der Nuten kann dabei in Bezug auf den gleichen Radius erfolgen. So kann die (tatsächliche) Breite der Nuten der Zahnriemenscheibe auf Höhe des gleichen Radius gemessen sein wie die durch die Profilgeometrie des Zahnriemens vorgegebene (theoretische) Breite der Nuten.

Die Nuten der Zahnriemenscheibe können gegenüber den Nuten einer nach ISO 13050 dimensionierten Normzahnriemenscheibe wenigstens im Bereich der Zahnfüße der Zähne der Zahnriemenscheibe, insbesondere auf Höhe eines Fußkreises der Zahnriemenscheibe, entlang der Umfangsrichtung verbreitert sein. Alternativ oder kumulativ können die Zähne der Zahnriemenscheibe gegenüber den Zähnen einer nach ISO 13050 dimensionierten Normzahnriemenscheibe wenigstens im Bereich der Zahnfüße der Zähne der Zahnriemenscheibe schmaler sein.

Der hier verwendete Begriff "Nuten" kann den in der Norm ISO 13050 verwendeten Begriffen "grooves" oder "pulley grooves" entsprechen.

Gemäß einem weiteren vorteilhaften Ausführungsbeispiel kann wenigstens eine Nut der Zahnriemenscheibe jeweils bezüglich einer durch die auf dem kleinsten Durchmesser liegende Stelle der jeweiligen Nut verlaufenden Radialebene asymmetrisch sein. Derart asymmetrische Nuten tragen der Tatsache Rechnung, dass an die Form der Zahnflanken verschiedene funktionale Anforderungen gerichtet sind. So kann es beispielsweise vorteilhaft sein, wenn eine zur Kraftübertragung mit dem Zahnriemen ausgestaltete Zahnflanke, die in dem einen durch die Radialebene abgeteilten Bereich der Nut angeordnet ist, anders ausgestaltet ist als eine nicht zur Kraftübertragung mit dem Zahnriemen ausgestaltete Zahnflanke, die in dem anderen durch die Radialebene abgeteilten Bereich der Nut angeordnet ist.

Die Radialebene teilt die Nut in zwei Bereiche, die in diesem Fall nicht symmetrisch zueinander sind. Die beiden Bereiche befinden sich zu beiden Seiten der Radialebene. Die Radialebene geht durch den Mittelpunkt der Zahnriemenscheibe und erstreckt sich in radialer und axialer Richtung. Radien und Durchmesser werden vom Mittelpunkt der Zahnriemenscheibe berechnet bzw. gemessen.

Die auf dem kleinsten Durchmesser liegende Stelle der Verzahnung der Zahnriemenscheibe bzw. einer Nut der Verzahnung der Zahnriemenscheibe kann auch als radial innerste Stelle einer Nut und/oder als radial tiefste Stelle einer Nut bezeichnet sein. Unter der auf dem kleinsten Durchmesser liegenden Stelle kann auch die auf dem kleinsten Radius liegende Stelle bezeichnet sein. Die auf dem kleinsten Durchmesser liegenden bzw. die innersten Stellen müssen nicht notwendigerweise jeweils ein einzelner Punkt sein, sondern können auch mehrere Punkte bzw. einen sich insbesondere in Umfangsrichtung erstreckenden Abschnitt der Nut umfassen. Ist die tiefste Stelle ein solcher Abschnitt, so kann die Radialebene bezüglich der Umfangsrichtung mittig durch den Abschnitt der Nut verlaufen, der die innerste Stelle darstellt.

Die auf dem kleinsten Durchmesser einer Nut liegende Stelle kann einen Nutgrund der Nuten bezeichnen. Sofern der Nutgrund keinen Scheitelpunkt oder mehrere Scheitelpunkte aufweist, kann die Radialebene bezüglich der Umfangsrichtung mittig durch den Nutgrund verlaufen.

Die Asymmetrie einer Nut kann dadurch entstehen, dass ein oder mehrere die Geometrie der Nut beschreibenden Parameter in dem einen durch die Radialebene abgeteilten Bereich der Nut einen anderen Wert einnimmt als in dem anderen durch die Radialebene abgeteilten Bereich der Nut. In dem einen durch die Radialebene abgeteilten Bereich hat die Nut eine andere Form als in dem anderen durch die Radialebene abgeteilten Bereich.

Dabei können die beiden durch die Radialebene getrennten Bereiche der Nut jeweils auf Höhe desselben Durchmessers miteinander verglichen werden.

Einige die Geometrie der Nut beschreibende bzw. bestimmende Parameter sind im Folgenden erläutert.

So kann in einer Ausgestaltung die Zahnflanke in dem einen durch die Radialebene abgeteilten Bereich eine andere Form aufweisen als die Zahnflanke in dem anderen durch die Radialebene abgeteilten Bereich. Beispielsweise können die Zahnflanken in den durch die Radialebene voneinander getrennten Bereichen unterschiedlich steil verlaufen. Eine derartige Ausgestaltung erschwert ein Hochlaufen der Zähne des Zahnriemens an der steileren Zahnflanke der Zahnriemenscheibe. Hierdurch ist ein sicherer Eingriff zwischen den Zähnen der Zahnriemenscheibe und den Zähnen des Zahnriemens gewährleistet.

Die unterschiedlich steilen Abschnitte der Zahnflanken in den beiden durch die Radialebene voneinander abgeteilten Bereichen können sich über die gesamte Zahnhöhe oder nur einen Teil der Zahnhöhe des jeweiligen Zahnes erstrecken. So können sich die unterschiedlich steilen Abschnitte der durch die Radialebene voneinander getrennten Bereich einer Nut von einem ersten Durchmesser hin zu einem zweiten Durchmesser erstrecken. Einer der beiden Durchmesser kann beispielsweise ein Fußkreisdurchmesser der Zahnriemenscheibe, ein Kopfkreisdurchmesser der Zahnriemenscheibe oder irgendein zwischen dem Fußkreisdurchmesser und dem Kopfkreisdurchmesser gelegener Durchmesser sein. Der zwischen dem Fußkreisradius und dem Kopfkreisradius gelegene Durchmesser kann sich beispielsweise auf Höhe der halben Zahnhöhe eines Zahns der Zahnriemenschiebe erstrecken.

Die Steilheit der Zahnflanke bestimmt sich bevorzugt relativ zur Radialrichtung an der betreffenden Stelle der Zahnflanke. Eine Zahnflanke ist umso steiler, je kleiner ihr Winkel zur Radialrichtung ist.

Die Zahnflanke in dem einen durch die Radialebene abgeteilten Bereich der Nut kann einen ersten Zahnflankenwinkel aufweisen und die Zahnflanke in dem anderen durch die Radialebene abgeteilten Bereich der Nut kann, insbesondere auf dem gleichen Durchmesser, einen vom ersten Zahnflankenwinkel verschiedenen zweiten Zahnflankenwinkel aufweisen. Insbesondere können die Zahnflankenwinkel der Zahnflanken unterschiedlich spitz bzw. unterschiedlich stumpf sein. Der zweite Zahnflankenwinkel ist vorzugsweise um etwa 0° bis 1°, insbesondere um etwa 0,5° größer bzw. stumpfer als der zweite Zahnflankenwinkel. Der Begriff "etwa" kann dabei einer Abweichung von ± 10 % entsprechen.

Die Zahnflankenwinkel der Zahnriemenscheibe, insbesondere eine geometrische Lage der Zahnflankenwinkel, können auf gleiche Weise definiert sein wie die Nutwinkel Φ einer nach ISO 13050 dimensionierten Normzahnriemenscheibe.

Um das Eintauchen der Zähne des Zahnriemens in die Nuten der Zahnriemenscheibe weiter zu vereinfachen, können die beiden durch die Radialebene voneinander getrennten Bereiche der wenigstens einen Nut gemäß einer weiteren vorteilhaften Ausgestaltung in wenigstens einem Abschnitt in Umfangsrichtung unterschiedlich breit sein. Die Breite kann sich beispielsweise auf Höhe eines Durchmessers in Umfangsrichtung von der Radialebene zu jeweils einer Zahnflanke erstrecken.

Gemäß einer weiteren vorteilhaften Ausführungsform können die beiden durch die Radialebene voneinander getrennten Zahnflanken der wenigstens einen Nut unterschiedlich konkav geformt sein. Die unterschiedlich konkav geformten Abschnitte liegen insbesondere auf einem Durchmesser bzw. in einem Bereich gleicher Durchmesser. Mit anderen Worten liegen sich die unterschiedlich konkaven Abschnitte in Umfangsrichtung in einer Nut gegenüber.

Unter unterschiedlich konkav geformten Zahnflanken kann verstanden sein, dass eine Zahnflanke des einen durch die Radialebene abgeteilten Bereichs der Nut eine andere Krümmung, beispielsweise einen anderen Krümmungsradius, aufweist als die Zahnflanke des anderen durch die Radialebene abgeteilten Bereichs der Nut. Die unterschiedlich konkaven Abschnitte der beiden sich in einer Nut gegenüberliegenden Zahnflanken liegen dabei bevorzugt auf demselben Durchmesser, beispielsweise jeweils auf der halben Zahnhöhe. Insbesondere können die beiden sich in der Nut gegenüberliegenden Zahnflanken an wenigstens einer, auf demselben Durchmesser liegenden Stelle unterschiedlich stark gekrümmt sein.

Eine konkave Zahnflanke kann nach innen, in Richtung des Zahnes hinein eingebuchtet sein. Die Einbuchtung kann eine Hinterschneidung bilden. Dies kann bedeuten, dass ein vom Mittelpunkt der Zahnriemenscheibe ausgehender Radiusstrahl, der die in Umfangsrichtung tiefste Stelle der Aushöhlung berührt, am Kopfkreis der Zahnriemenscheibe den Zahnkopf schneidet. Nur eine einzige der sich in einer Nut gegenüberliegenden Zahnflanken kann mit einer Hinterschneidung versehen sein. Alternativ können die beiden sich in einer Nut gegenüberliegenden Zahnflanken unterschiedliche Hinterschneidungen aufweisen.

Alternativ oder kumulativ kann eine der beiden sich in einer Nut gegenüberliegenden Zahnflanken eine sich in Umfangsrichtung tiefer in den Zahn erstreckende Einbuchtung bzw. Vertiefung als die andere der beiden Zahnflanken aufweisen.

Die eine größere und/oder tiefere Einbuchtung bzw. Vertiefung aufweisende Zahnflanke kann diejenige Zahnflanke sein, die zur Kraftübertragung mit den Zähnen des Zahnriemens ausgestaltet ist, also beispielsweise in demjenigen durch die Radialebene abgetrennten Bereich einer Nut liegen, der auf der in Richtung des zu übertragenden Drehmoments weisenden Seite der Nut liegt.

Die Zahnflanken der beiden durch die Radialebene abgetrennten Bereiche der Nut bzw. Konturen der Zahnflanken können einen Übergang aufweisen, in dem der Verlauf der Zahnflanken bzw. der Konturen der Zahnflanken von konvex zu konkav bzw. von konkav zu konvex wechselt. Insbesondere kann am Übergang ein mathematisches Vorzeichen der Krümmung von Plus nach Minus oder andersherum wechseln. Der Übergang kann bei beiden Zahnflanken jeweils auf dem gleichen oder auf jeweils einem unterschiedlichen Durchmesser angeordnet sein.

Insbesondere eine Einbuchtung oder eine Hinterschneidung unterbindet zuverlässig ein Hochlaufen der Zähne der Zahnriemenscheibe, ohne die Zähne der Zahnriemenscheibe an den Zahnfüßen und Zahnköpfen zu schwächen.

Die sich in einer Nut in Umfangsrichtung gegenüberliegenden Abschnitte, die unterschiedlich konkav ausgestaltet sind, können sich über die gesamte Zahnhöhe oder nur einen Teil der Zahnhöhe erstrecken. Insbesondere liegen die beiden Abschnitte, die unterschiedlich konkav ausgestaltet sind, wenigstens auf der halben Zahnhöhe bzw. zwischen der halben Zahnhöhe und dem Kopfkreisdurchmesser.

Unter der halben Zahnhöhe kann eine mittlere Zahnhöhe verstanden sein. Die Zahnhöhe kann etwa 50% der Differenz zwischen dem Kopfkreisdurchmesser und dem Fußkreisdurchmesser der Zahnriemenscheibe entsprechen. Der Kopfkreisdurchmesser kann dem Durchmesser der Zahnriemenscheibe an einem Kopfkreis und der Fußkreisdurchmesser kann dem Durchmesser der Zahnriemenscheibe an einem Fußkreis entsprechen. Der Kopfkreis der Zahnriemenscheibe kann durch die Zahnköpfe und der Fußkreis der Zahnriemenscheibe kann durch die Zahnfüße der Zähne der Zahnriemenscheibe verlaufen.

Die eingangs genannte Aufgabe wird ferner gelöst durch einen Riementrieb für ein Fahrrad, mit wenigstens einer Zahnriemenscheibe und mit einem Zahnriemen, wobei eine Teilung des Zahnriemens größer ist als eine Teilung der Zahnriemenscheibe. Ein derartiger Riementrieb ist weniger störungsanfällig, weil das Eingreifen bzw. Eintauchen der Zähne des Zahnriemens in die Nuten der Zahnriemenscheibe vereinfacht wird. Ein solcher Riementrieb ist folglich sicherer und zuverlässiger.

Die oben beschriebenen Ausführungen der Zahnriemenscheibe gelten auch für einen Riementrieb, der wenigstens eine solche Zahnriemenscheibe aufweist. So kann ein Merkmal, das oben im Kontext der Zahnriemenscheibe beschrieben ist, ein Merkmal der Zahnriemenscheibe des Riementriebs sein.

Um die Belastung des Zahnriemens zu verringern und eine gute Kraftübertragung zwischen Zahnriemenscheibe und Zahnriemen sicherzustellen, können die Zähne der Zahnriemenscheibe gemäß einer vorteilhaften Ausgestaltung über einen sich entlang der Umfangsrichtung der Zahnriemenscheibe erstreckenden Umschlingungswinkel von wenigstens etwa 45°, wenigstens etwa 90° oder wenigstens etwa 135° mit den Zähnen des Zahnriemens in Eingriff stehen, wenn der Riementrieb fertig bzw. betriebsbereit montiert ist. Diese Eigenschaft kann umgesetzt werden, da die Zähne am Zahnriemen eine gewisse Elastizität aufweisen können.

Der Umschlingungswinkel kann sich entlang einer Umfangsrichtung der Zahnriemenscheibe erstrecken. Bei dem Riementrieb kann im betriebsbereiten Zustand ohne Last etwa ein Achtel bis zu einem Drittel der Anzahl der Zähne der Zahnriemenscheibe mit den Zähnen (bzw. den Nuten) des Zahnriemens in Eingriff stehen.

Die Zähne der Zahnriemenscheibe können beispielsweise dann als mit den Zähnen des Zahnriemens in Eingriff stehend betrachtet sein, wenn die Zähne des Zahnriemens um wenigstens etwa 80% der Zahnhöhe der Zähne des Zahnriemens in die Nuten der Zahnriemenscheibe eintauchen. Die Zähne der Zahnriemenscheibe können als mit den Zähnen des Zahnriemens tragend in Eingriff stehend betrachtet sein, wenn zwischen den Zähnen der Zahnriemenscheibe und den Zähnen des Zahnriemens eine Kraft und/oder ein Drehmoment übertragen wird.

In einer vorteilhaften Ausgestaltung ist der Riementrieb derart ausgestaltet, dass sich der Umschlingungswinkel, über den die Zähne der Zahnriemenscheibe mit den Zähnen des Zahnriemens tragend in Eingriff stehen, mit steigender Betriebslast vergrößert. Unter der Betriebslast kann eine Kraft verstanden sein, mit der der Zahnriemen beaufschlagt ist. Die Betriebslast kann ferner einem Drehmoment entsprechen, das der Riementrieb überträgt. Die Betriebslast sollte kleiner sein als die bestimmungsgemäß zulässige Betriebslast, mit der der Zahnriemen gerade noch betrieben werden kann. Um den in den Nuten der Zahnriemenscheibe vorhandenen Platz zu vergrößern und bei einer Verwindung des Riementriebs das Eintauchen der Zähne des Zahnriemens in die Nuten der Zahnriemenscheibe zu vereinfachen, kann ein Flankenspiel zwischen den Zähnen des Zahnriemens und den Zähnen der Zahnriemenscheibe größer sein als ein Flankenspiel zwischen den Zähnen des Zahnriemens und den Zähnen einer durch die Profilgeometrie des Zahnriemens vorgegebenen Zahnriemenscheibe.

Das Flankenspiel kann als Differenz zwischen einer Breite in Umfangsrichtung einer Nut der Zahnriemenscheibe und einer Breite in Umfangsrichtung eines Zahnes des Zahnriemens definiert sein. Die Breite einer Nut der Zahnriemenscheibe und die Breite eines Zahnes des Zahnriemens können auf Höhe des gleichen Durchmessers, insbesondere dann, wenn die Zähne des Zahnriemens ordnungsgemäß in die Nuten der Zahnriemenscheibe eingreifen, bestimmt sein.

In einer vorteilhaften Ausgestaltung weist der Riementrieb eine Einlaufstelle, an der der Zahnriemen in die Zahnriemenscheibe einläuft, und eine Auslaufstelle, an der der Zahnriemen aus der Zahnriemenscheibe ausläuft, auf, wobei sich eine Lücke zwischen den in Umfangsrichtung zur Einlaufstelle weisenden Zahnflanken der Zahnriemenscheibe und den diesen Zahnflanken gegenüberliegenden, in Umfangsrichtung zur Auslaufstelle weisenden Zahnflanken des Zahnriemens von der Einlaufstelle zur Auslaufstelle verkleinert.

Die vorgenannte Ausgestaltung sowie die folgenden, die Lücke betreffenden Ausgestaltungen beziehen sich insbesondere auf die geometrischen Verhältnisse, wenn der Riementrieb fabrikneu oder nur wenig abgenutzt ist, beispielsweise nur 20 % seiner Lebensdauer erreicht hat.

Im kraftfreien Zustand des sich im Eingriff mit der Zahnriemenscheibe befindlichen Zahnriemens verringert sich über den Umschlingungswinkel eine in Umfangsrichtung gelegene Lücke zwischen den in einer Umfangsrichtung weisenden Zahnflanken des Zahnriemens und den jeweils diesen Zahnflanken des Zahnriemens gegenüberliegenden Zahnflanken der Zahnriemenscheibe, während sich in der anderen, entgegengesetzten Umfangsrichtung diese Lücke bei der jeweils anderen Zahnflanke des Zahnriemens verringert. Steigt das vom Zahnriemen auf die Zahnriemenscheibe zu übertragende Drehmoment, verkleinern sich die Lücken zwischen den in Richtung des Drehmoments weisenden Zahnflanken des Zahnriemens und den jeweils gegenüberliegenden Zahnflanken der Zahnriemenscheibe, bis alle Zahnflanken aneinander liegen und der Zahnriemen das Drehmoment über den gesamten Umschlingungswinkel überträgt.

Beispielsweise verringert sich die Lücke zwischen den in Umfangsrichtung zur Einlaufstelle weisenden Zahnflanken der Zahnriemenscheibe und den diesen Zahnflanken gegenüberliegenden, in Umfangsrichtung zur Auslaufstelle weisenden Zahnflanken des Zahnriemens von der Einlaufstelle zur Auslaufstelle. Umgekehrt vergrößert sich beispielsweise die Lücke zwischen den in Umfangsrichtung zur Auslaufstelle weisenden Zahnflanken der Zahnriemenscheibe und den diesen Zahnflanken gegenüberliegenden, in Umfangsrichtung zur Einlaufstelle weisenden Zahnflanken des Zahnriemens von der Einlaufstelle zur Auslaufstelle. Die Drehrichtung der Zahnriemenscheibe bzw. die Richtung des vom Zahnriemen auf die Zahnriemenscheibe zu übertragenden Drehmoments ist dabei in Umfangsrichtung von der Einlaufstelle zur Auslaufstelle gerichtet.

In einer Ausgestaltung kann sowohl eine Lücke zwischen den in Umfangsrichtung zur Einlaufstelle weisenden Zahnflanken der Zahnriemenscheibe und den diesen Zahnflanken gegenüberliegenden, in Umfangsrichtung zur Auslaufstelle weisenden Zahnflanken des Zahnriemens, als auch eine Lücke zwischen den in Umfangsrichtung zur Auslaufstelle weisenden Zahnflanken der Zahnriemenscheibe und den diesen Zahnflanken gegenüberliegenden, in Umfangsrichtung zur Einlaufstelle weisenden Zahnflanken des Zahnriemens bestehen.

In einer anderen Ausgestaltung können im kraftfreien Zustand des Riementriebs nur jeweils die ersten drei bis fünf an der Auslaufstelle der Zahnriemenscheibe gelegenen, in Umfangsrichtung zur Auslaufstelle weisenden Zahnflanken des Zahnriemens an jeweils gegenüberliegenden, in Umfangsrichtung zur Einlaufstelle weisenden Zahnflanken der Zahnriemenscheibe anliegen. Die übrigen in Umfangsrichtung zur Auslaufstelle weisenden Zahnflanken des Zahnriemens sind dabei von den jeweils gegenüberliegenden, in Umfangsrichtung zur Einlaufstelle weisenden Zahnflanken der Zahnriemenscheibe beabstandet. Im kraftfreien Zustand wird das Drehmoment also nur von den ersten drei bis fünf an der Auslaufstelle der Zahnriemenscheibe gelegenen Zahnflanken des Zahnriemens vom Zahnriemen auf die Zahnriemenscheibe übertragen. Ähnliche Verhältnisse können an der Einlaufstelle vorliegen: im kraftfreien Zustand des Riementriebs können nur jeweils die ersten drei bis fünf an der Einlaufstelle der Zahnriemenscheibe gelegenen, in Umfangsrichtung zur Auslaufstelle weisenden Zahnflanken des Zahnriemens an den jeweils gegenüberliegenden Zahnflanken der Zahnriemenscheibe anliegen. Mit zunehmendem zu übertragendem Drehmoment erhöht sich die Anzahl der in Umfangsrichtung zur Auslaufstelle weisenden Zahnflanken des Zahnriemens, die an der Zahnriemenscheibe anliegen. Der Umschlingungswinkel, über den das Drehmoment übertragen wird - der "tragende" Umschlingungswinkel - erhöht sich. Der Umschlingungswinkel ist in Umfangsrichtung von der Einlaufstelle in Richtung der Auslaufstelle des Zahnriemens gemessen. Die Richtung, in der der tragende Umschlingungswinkel steigt, kann dem Drehsinn der Zahnriemenscheibe entgegengerichtet sein. Der Umschlingungswinkel kann von der Auslaufstelle als Nullpunkt ausgehend in Umfangsrichtung gemessen sein. Die Auslaufstelle kann sich in verschiedenen Belastungssituationen bzw. unter Beaufschlagung des Zahnriemens mit verschiedenen Kräften an unterschiedlichen Positionen des Zahnriemens befinden. So kann der Nullpunkt des Umschlingungswinkels in verschiedenen Belastungssituationen an unterschiedlichen Positionen des Zahnriemens angeordnet sein.

Gemäß einem weiteren vorteilhaften Ausführungsbeispiel kann der Riementrieb zur Übertragung einer Kraft oder eines Drehmomentes von einem treibenden Zahnriemen auf eine angetriebene Zahnriemenscheibe, insbesondere für ein Zweirad, ausgestaltet sein und
- Zahnflanken des treibenden Zahnriemens, die im Betrieb in kämmende Verbindung mit einer angetriebenen Zahnriemenscheibe treten können,
- Zahnflanken der angetriebenen Zahnriemenscheibe, die im Betrieb in kämmende Verbindung mit dem treibenden Zahnriemen treten können, und
- eine Kraft, die vom Lasttrum des treibenden Zahnriemens über die Zahnflanken des treibenden Zahnriemens auf die Zahnflanken der angetriebenen Zahnriemenscheibe übertragen wird,
aufweisen. Innerhalb der kämmenden Verbindung können sich eine Anzahl an kraftübertragenden Zahnflanken des treibenden Zahnriemens und Zahnflanken der angetriebenen Zahnriemenscheibe paarweise gegenüberliegen und in Berührung stehen. Innerhalb der kämmenden Verbindung können sich weiter eine Anzahl an nicht-kraftübertragenden Zahnflanken des treibenden Zahnriemens und nicht-kraftübertragenden Zahnflanken der angetriebenen Zahnriemenscheibe paarweise gegenüberliegen und nicht in Berührung stehen. Der Riementrieb kann während des Betriebs in einen wenig belasteten Zustand, in dem die Kraft einen niedrigen Wert besitzt, in dem der Riementrieb eine kleine Anzahl an kraftübertragenden Zahnflanken und eine große Anzahl an nicht-kraftübertragenden Zahnflanken aufweist, bringbar sein. Der Riementrieb kann in wenigstens einen Zwischenzustand, in dem die Kraft einen mittleren Wert besitzt, in dem der Riementrieb eine mittlere Anzahl an kraftübertragenden Zahnflanken und eine mittlere Anzahl an nicht-kraftübertragenden Zahnflanken aufweist, bringbar sein. Ferner kann der Riementrieb in einen hoch belasteten Zustand, in dem die Kraft einen hohen Wert besitzt, in dem der Riementrieb eine hohe Anzahl an kraftübertragenden Zahnflanken und eine kleine Anzahl an nicht-kraftübertragenden Zahnflanken aufweist, bringbar sein.

Unter einem niedrigen Wert der Kraft kann beispielsweise ein Wert unterhalb von etwa 5% der Bruchlast des Zahnriemens verstanden sein. Ein mittlerer Wert der Kraft kann beispielsweise zwischen etwa 5% und etwa 30% der Bruchlast des Zahnriemens liegen. Unter einem hohen Wert der Kraft können beispielsweise Werte oberhalb von etwa 30% der Bruchlast des Zahnriemens verstanden sein.

Unter der Bruchlast kann diejenige Zugkraft verstanden sein, bei der der Zahnriemen reißt.

Ein hochwertiger Zahnriemen für ein Fahrrad besitzt üblicherweise eine Bruchlast von etwa 12000 N.

Unter einem niedrigen Wert der Kraft bei einem Zahnriemen kann beispielsweise ein Wert zwischen etwa 100 N und 600 N verstanden sein. Ein mittlerer Wert der Kraft bei einem Zahnriemen kann beispielsweise zwischen etwa 600 N und 3600 N liegen. Unter einem hohen Wert der Kraft bei einem Zahnriemen können Werte oberhalb von etwa 3600 N verstanden sein.

Eine kleine Anzahl an kraftübertragenden Zahnflanken des treibenden Zahnriemens und Zahnflanken der angetriebenen Zahnriemenscheibe kann beispielsweise zwischen etwa 10% und etwa 20%, eine mittlere Anzahl beispielsweise zwischen etwa 20% und 35%, und eine hohe Anzahl beispielsweise mehr als etwa 35% der Gesamtanzahl an Zähnen, die die angetriebene Zahnriemenscheibe aufweist, betragen.

Eine kleine Anzahl an nicht-kraftübertragenden Zahnflanken des treibenden Zahnriemens und Zahnflanken der angetriebenen Zahnriemenscheibe kann beispielsweise zwischen etwa 10% und etwa 20%, eine mittlere Anzahl beispielsweise zwischen etwa 20% und etwa 35%, und eine hohe Anzahl beispielsweise mehr als etwa 35% der Gesamtanzahl an Zähnen, die die angetriebene Zahnriemenscheibe aufweist, betragen.

Eine angetriebene Zahnriemenscheibe an einem Fahrrad besitzt üblicherweise zwischen etwa 20 und etwa 40 Zähnen.

Der Begriff "etwa" kann einer Abweichung von +- 10% entsprechen.

Die anfangs genannte Aufgabe wird ferner gelöst durch ein Fahrrad, insbesondere ein Elektrofahrrad, wobei das Fahrrad eine erfindungsgemäße Zahnriemenscheibe und/oder einen erfindungsgemäßen Riementrieb aufweist. Ein derartiges Fahrrad ist besonders zuverlässig und sicher.

Gemäß einer vorteilhaften Ausgestaltung kann eine oder die Zahnriemenscheibe im Bereich eines Tretlagers des Fahrrads angeordnet sein und/oder eine oder die Zahnriemenscheibe kann im Bereich einer Radnabe des Fahrrads angeordnet sein. Eine solche Ausgestaltung steigert die Zuverlässigkeit und Sicherheit des Fahrrads noch weiter, da die angetriebene und/oder die antreibende Zahnriemenscheibe besonders störungsarm mit dem Zahnriemen interagiert bzw. interagieren.

In einer Ausgestaltung ist lediglich die getriebene Zahnriemenscheibe erfindungsgemäß ausgestaltet. Die getriebene Zahnriemenscheibe kann an der Radnabe, insbesondere an einer Hinterradnabe des Fahrrads angeordnet sein. Sind mehrere getriebene Zahnriemenscheiben vorhanden, so kann in einer Ausführung jede der getriebenen Zahnriemenscheiben erfindungsgemäß ausgestaltet sein. Unter einer getriebenen Zahnriemenscheibe kann eine abtriebsseitige Zahnriemenscheibe verstanden sein.

Bei der Radnabe handelt es sich vorzugsweise um die Hinterradnabe, jedoch kann es sich auch um eine Vorderradnabe handeln. Das Fahrrad kann ferner eine Motor- und/oder Getriebeeinheit aufweisen, die mit wenigstens einer Zahnriemenscheibe des Riementriebs drehmomentübertragend verbindbar bzw. verbunden ist. Die Motor- und/oder Getriebeeinheit kann beispielsweise im Bereich des Tretlagers oder direkt am Tretlager angeordnet sein oder das Tretlager aufweisen. Selbstverständlich kann das Fahrrad auch mit Nabengetriebe und/oder Nabenmotor versehen sein bzw. die Motor- und/oder Getriebeeinheit kann an einer Radnabe angeordnet sein.

Damit das Fahrrad besonders gut für das Fahren in unebenem Gelände geeignet ist, kann das Fahrrad gemäß einer vorteilhaften Ausgestaltung einen gefederten Hinterbau aufweisen. Vorzugsweise ist das Fahrrad als Full Suspension Bike ausgestaltet.

Die eingangs gestellte Aufgabe wird ferner gelöst durch einen Bausatz für einen Riementrieb, mit wenigstens zwei wie oben beschrieben ausgestalteten Zahnriemenscheiben für Zahnriemen mit derselben vorgegebenen Teilung und Verzahnungsgeometrie, wobei die Zahnriemenscheiben unterschiedliche Zähnezahlen und unterschiedliche Kopfkreisdurchmesser aufweisen, und wobei die Zahnriemenscheiben jeweils eine Teilung aufweisen, die jeweils kleiner ist als die Teilung des Zahnriemens. Insbesondere bei Anwendungen im Fahrrad-Bereich weisen Riementriebe in der Regel mehrere unterschiedlich große Zahnriemenscheiben auf. Die Zahnriemenscheiben lassen sich so beispielsweise gegeneinander austauschen, um jeweils Riementriebe unterschiedlicher Übersetzung zu realisieren. Die unterschiedlichen Übersetzungen schlagen sich in unterschiedlichen Eingriffsbedingungen, beispielsweise einem unterschiedlichen Umschlingungswinkel, nieder. Durch die unterschiedliche Ausgestaltung der Zahnriemenscheiben lassen sich diese an die unterschiedlichen Eingriffsbedingungen anpassen, um jeweils optimal Eingriffsstörungen zu verhindern.

So kann eine Zahnriemenscheibe für ein Zahnriemenritzel beispielsweise einen kleineren Kopfkreisdurchmesser aufweisen als eine Zahnriemenscheibe für ein Zahnriemenrad. Der Bausatz stellt diese verschieden großen Zahnriemenscheiben flexibel zur Verfügung. Gleichzeitig ist jede der Zahnriemenscheiben des Bausatzes in sich vorteilhaft, da aufgrund ihrer gegenüber der Teilung des Zahnriemens kleineren Teilung der Eingriff verbessert ist.

In einer Ausgestaltung können die Teilungen wenigstens zweier Zahnriemenscheiben, vorzugsweise jedoch die Teilungen aller Zahnriemenscheiben des Bausatzes identisch sein. In einer anderen Ausgestaltung weisen Zahnriemenscheiben mit unterschiedlichen Zähnezahlen eine unterschiedliche Verzahnung, insbesondere eine unterschiedliche Teilung auf.

Wenn oben von einem Bausatz die Rede ist, so sind üblicherweise nicht alle Zahnriemenscheiben des Bausatzes im Fahrrad verbaut. Der Nutzer des Fahrrades oder die Mitarbeiter einer Fahrradwerkstatt sind aufgrund der Eigenschaften des Bausatzes in der Lage, den Riementrieb in seinen Eigenschaften an die aktuellen Bedürfnisse anzupassen.

Im Folgenden sind Ausführungsbeispiele mit Bezug auf die beigefügten Figuren näher erläutert. Dabei können einzelne, im nachstehenden Ausführungsbeispiel vorhandene Merkmale weggelassen werden, wenn es nach Maßgabe der obigen Ausführungsformen auf den mit diesem Merkmal verknüpften technischen Effekt nicht ankommen sollte. Umgekehrt kann ein oben beschriebenes, aber bei einem nachstehenden Ausführungsbeispiel nicht vorhandenes Merkmal dem Ausführungsbeispiel hinzugefügt werden, wenn es bei einer bestimmten Anwendung auf den mit diesem Merkmal verknüpften technischen Effekt ankommen sollte.

Im Folgenden sind für Elemente, die einander hinsichtlich Struktur und/oder Funktion entsprechen, dieselben Bezugszeichen verwendet.

Es zeigen:
- Fig. 1: eine schematische Schnittansicht einer Zahnriemenscheibe und eines Zahnriemens gemäß einem möglichen Ausführungsbeispiel;
- Fig. 2: eine schematische Schnittansicht einer asymmetrischen Nut einer Zahnriemenscheibe gemäß einem möglichen Ausführungsbeispiel;
- Fig. 3: eine schematische Schnittansicht einer asymmetrischen Nut einer Zahnriemenscheibe gemäß einem weiteren möglichen Ausführungsbeispiel;
- Fig. 4: eine schematische Schnittansicht einer asymmetrischen Nut einer Zahnriemenscheibe gemäß einem weiteren möglichen Ausführungsbeispiel;
- Fig. 5: eine schematische Schnittansicht einer asymmetrischen Nut einer Zahnriemenscheibe gemäß einem weiteren möglichen Ausführungsbeispiel;
- Fig. 6: eine schematische Schnittansicht eines Riementriebs gemäß einem möglichen Ausführungsbeispiel;
- Fig. 7: eine schematische Schnittansicht des in Fig. 6 dargestellten Riementriebs in einem anderen Betriebszustand;
- Fig. 8: eine schematische perspektivische Darstellung eines Fahrrads gemäß einem möglichen Ausführungsbeispiel; und
- Fig. 9: eine schematische Schnittansicht eines Bausatzes gemäß einem möglichen Ausführungsbeispiel.

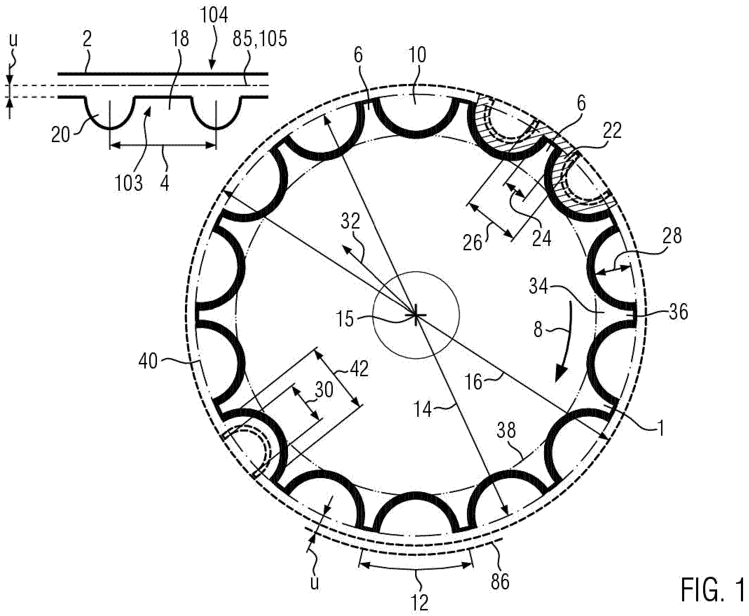

Fig. 1 zeigt rein exemplarisch eine Zahnriemenscheibe 1 und einen Ausschnitt eines Zahnriemens 2 mit einer vorgegebenen Teilung 4 und einer Wirklinie 85. Die Zahnriemenscheibe 1 weist Zähne 6, die entlang einer Umfangsrichtung 8 der Zahnriemenscheibe 1 an der Zahnriemenscheibe 1 angeordnet sind, sowie Nuten 10 auf, die in Umfangsrichtung 8 der Zahnriemenscheibe 1 zwischen jeweils benachbarten Zähnen 6 der Zahnriemenscheibe 1 angeordnet sind. Die Zahnriemenscheibe 1 weist eine Teilung 12 auf, die kleiner als die Teilung 4 des Zahnriemens 2 ist. Im in Fig. 1 dargestellten Ausführungsbeispiel ist die Teilung 12 der Zahnriemenscheibe 1 als Kreisbogenlänge auf dem Wirkkreisdurchmesser 86 gemessen. Die Form der Zähne 6 und Nuten 10 der Zahnriemenscheibe 1 ist nicht festgelegt auf die in Fig. 1 lediglich schematisch dargestellte Form der Zähne 6 und Nuten 10.

Die Zahnriemenscheibe 1 weist einen (tatsächlichen) Kopfkreisdurchmesser 14 auf, der im dargestellten Ausführungsbeispiel kleiner ist als ein (theoretischer) Kopfkreisdurchmesser 16, der durch die Profilgeometrie des Zahnriemens 2 eigentlich vorgegeben wäre. Durch die Profilgeometrie des Zahnriemens 2 sind Parameter bestimmt, die die Form der Nuten 18 und Zähnen 20 des Zahnriemens 2 charakterisieren. Der Kopfkreisdurchmesser 16, der durch die Profilgeometrie des Zahnriemens 2 vorgegeben ist, ist in Fig. 1 rein exemplarisch und nicht maßstäblich als gestrichelte Linie angedeutet. Der Kopfkreisdurchmesser 16 ist ausgehend von einem Mittelpunkt 15 der Zahnriemenscheibe 1 bestimmt, um den sich die Zahnriemenscheibe 1 dreht. Die tatsächliche und gegenüber dem Zahnriemen 2 verkleinerte Teilung 12 ist im dargestellten Ausführungsbeispiel als Kreisbogenlänge auf dem Wirkkreisdurchmesser 86 gemessen. Der Wirkkreisdurchmesser 86 kann sich durch Addition des (tatsächlichen) Kopfkreisdurchmessers 14 und eines doppelten Wirklinienabstands u errechnen. Der Wirklinienabstand u kann durch die technische Bauart des Zahnriemens 2 vorgegeben sein. Der Wirklinienabstand u kann zwischen zwei Zähnen 20 des Zahnriemens 2 und insbesondere an der Stelle gemessen sein, an der ein Abstand zwischen einem Riemenrücken 104 und einer Riemenlauffläche 103 minimal ist. Der Wirklinienabstand u kann dem Abstand zwischen der neutralen Faser des Zugstrangs 105 im Zahnriemen 2 und der Riemenlauffläche 103 entsprechen. Der Abstand kann senkrecht zur Riemenlauffläche 103 und/oder senkrecht zur neutralen Faser des Zugstrangs 105 gemessen sein.

Wie aus Fig. 1 ersichtlich ist, können die Zähne 6 der Zahnriemenscheibe 1 zumindest abschnittsweise in Umfangsrichtung 8 schmaler sein als die durch die Profilgeometrie des Zahnriemens 2 eigentlich vorgegebenen Zähne 22. Die Zähne 6 der Zahnriemenscheibe 1 können eine Breite 24 in Umfangsrichtung 8 aufweisen, die schmaler ist als eine durch die Profilgeometrie der Zahnriemens 2 vorgegebene Breite 26 der Zähne 6. Im dargestellten Ausführungsbeispiel weisen die Zähne 6 entlang ihrer gesamten Zahnhöhe 28 in Bezug auf die Umfangsrichtung 8 eine geringere Breite 24 auf als die durch die Profilgeometrie des Zahnriemens 2 vorgegebenen Zähne 22, deren Kontur in Fig. 1 rein exemplarisch ebenfalls als gestrichelte Linie dargestellt ist. Die Zahnhöhe 28 kann einen Abstand in einer Radialrichtung 32 der Zahnriemenscheibe 1 zwischen einem Zahnfuß 34 und einem Zahnkopf 36 der Zähne 6 der Zahnriemenscheibe 1 bzw. einen Abstand in Radialrichtung 32 zwischen einem Fußkreis 38 und einem Kopfkreis 40 der Zahnriemenscheibe 1 darstellen.

Die Nuten 10 der in Fig. 1 gezeigten exemplarischen Zahnriemenscheibe 1 weisen eine Breite 42 in Umfangsrichtung 8 auf. Die Breite 42 in Umfangsrichtung 8 der Nuten 10 der Zahnriemenscheibe 1 muss nicht, wie in Fig. 1 gezeigt ist, über die gesamte Zahnhöhe 38 größer sein als eine durch die Profilgeometrie des Zahnriemens 2 vorgegebene Breite 30 der Nuten 10. So können die Nuten 10 der Zahnriemenscheibe 1 gemäß einer anderen Ausgestaltung auch lediglich im Bereich der Zahnfüße 34 der Zähne 6 der Zahnriemenscheibe 1 oder in einem anderen Abschnitt der Zähne 6 der Zahnriemenscheibe 1 eine größere Breite 42 als die von der Profilgeometrie des Zahnriemens 2 eigentlich geforderte Breite 30 aufweisen.

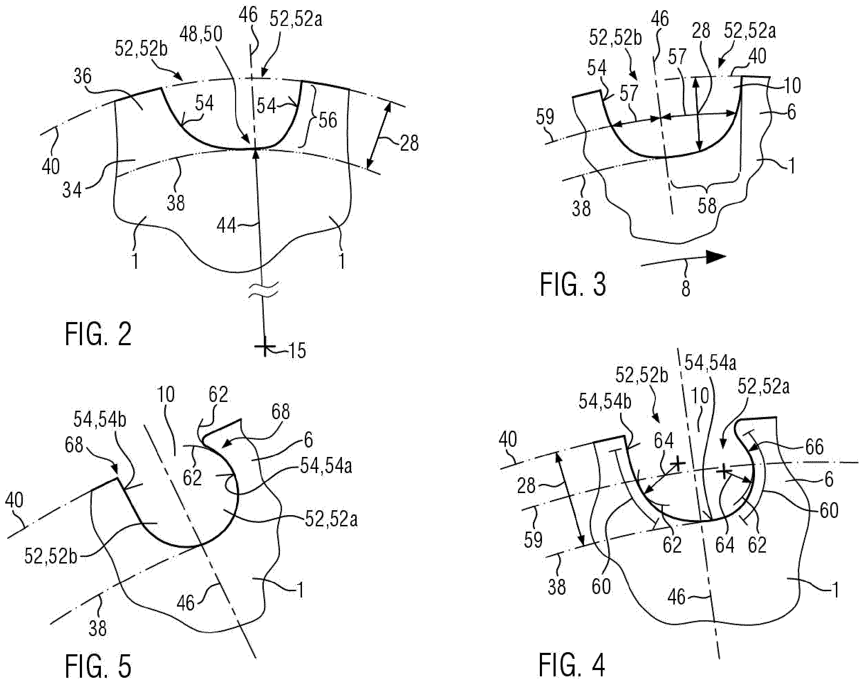

Wie die in Fig. 2 dargestellte schematische Schnittansicht zeigt, kann wenigstens eine Nut 10 der Zahnriemenscheibe 1 asymmetrisch ausgestaltet sein. Im dargestellten Ausführungsbeispiel ist die Nut 10 bezüglich einer Radialebene 46 asymmetrisch, die durch eine Stelle 48 der Nut 10 verläuft, die auf dem kleinsten Durchmesser bzw. Radius 44 liegt. Diese Stelle 48 kann, wie weiter zu sehen ist, einem Scheitelpunkt 50 der Nut 10 entsprechen. Die Radialebene 46 geht durch den Mittelpunkt 15 der Zahnriemenscheibe 1 und erstreckt sich in radialer und axialer Richtung.

Die Radialebene 46 kann die wenigstens eine Nut 10 in zwei Bereiche 52 bzw. 52a, 52b teilen. In jedem Bereich 52a, 52b liegt eine der beiden Zahnflanken 54, die sich in der Nut 10 gegenüberliegen.

Wie aus Fig. 2 ersichtlich ist, kann eine Zahnflanke 54, die im einen Bereich 52a angeordnet ist, in Bezug auf die Radialebene 46 in wenigstens einem Abschnitt 56 steiler verlaufen als die Zahnflanke 54, die im anderen Bereich 52b angeordnet ist. Im gezeigten Ausführungsbeispiel ist die Zahnflanke 54 des einen Bereichs 52, 52a entlang der gesamten Zahnhöhe 28 steiler als die Zahnflanke 54 des anderen Bereichs 52, 52b. Folglich erstreckt sich der Abschnitt 56, in dem die Zahnflanken 54 unterschiedlich steil verlaufen, im dargestellten Ausführungsbeispiel vom Zahnfuß 34 bis zum Zahnkopf 36 der Zahnflanke 54 bzw. vom Fußkreis 38 der Zahnriemenscheibe 1 bis zum Kopfkreis 40 der Zahnriemenscheibe 1. Selbstverständlich kann sich der Abschnitt 56 gemäß einer anderen Ausgestaltung beispielsweise auch vom Zahnkopf 36 in Richtung kleinerer Radien oder vom Zahnfuß 34 in Richtung größerer Radien der Zahnriemenscheibe 1 erstrecken.

Fig. 3 zeigt eine zur Radialebene 46 asymmetrische Nut 10 der Zahnriemenscheibe 1, wobei beide Bereiche 52, 52a, 52b der Nut 10 in einem Abschnitt 58 in Umfangsrichtung 8 unterschiedlich breit sind. Im dargestellten Ausführungsbeispiel erstreckt sich der Abschnitt 58, in dem die beiden Bereiche in Umfangsrichtung 8 unterschiedlich breit sind, vom Fußkreis 38 der Zahnriemenscheibe 1 bis zum Kopfkreis 40. Gemäß einer anderen Ausgestaltung kann sich der Abschnitt 58 selbstverständlich auch zwischen zwei anderen Durchmessern bzw. Radien der Zahnriemenscheibe 1 erstrecken. So kann sich der Abschnitt 58 beispielsweise von einem größeren Durchmesser als dem des Fußkreises 38 bis zum Kopfkreis 40 der Zahnriemenscheibe 1 erstrecken, so dass die beiden Bereiche 52, 52a, 52b entlang der gesamten Zahnflanken 54 unterschiedlich breit sind. Die Breite 57 wird bevorzugt in Umfangsrichtung 8 entlang eines Durchmessers 59 von der Radialebene 46 zur Zahnflanke 54 gemessen.

Das in Fig. 4 gezeigte Ausführungsbeispiel zeigt eine zur Radialebene 46 asymmetrische Nut 10, deren Zahnflanken 54 der beiden Bereiche 52, 52a, 52b in einem Abschnitt 60 unterschiedlich konkav geformt sind.

Die Radialebene 46 teilt die asymmetrische Nut 10 in den einen Bereich 52, 52a mit einer ersten Zahnflanke 54, 54a und den anderen Bereich 52b mit einer zweiten Zahnflanke 54, 54b. Die erste Zahnflanke 54, 54a ist im in Fig. 4 gezeigten Ausführungsbeispiel in dem Abschnitt 60 konkaver bzw. stärker konkav als die zweite Zahnflanke 54, 54b. Wie weiter ersichtlich ist, kann die erste Zahnflanke 54, 54a in dem Abschnitt 60 eine stärkere Krümmung 62, insbesondere einen kleineren Krümmungsradius 64 aufweisen als die zweite Zahnflanke 54, 54b.

Wie aus Fig. 4 weiter ersichtlich ist, kann die wenigstens abschnittsweise konkavere Form einer Zahnflanke 54 bedeuten, dass die Zahnflanke 54 mit der wenigstens abschnittsweise konkaveren Form eine Aushöhlung oder Vertiefung 66 aufweist. Im dargestellten Ausführungsbeispiel weist die erste Zahnflanke 54, 54a im ersten Bereich eine solche Vertiefung 66 auf, die sich in Richtung einer auf die Umfangsrichtung 8 bezogenen Zahnmitte 68 des Zahns 6 mit der ersten Zahnflanke 54, 54a erstreckt. Anstelle der oder zusätzlich zur Vertiefung 66 kann die Zahnflanke 54, 54a einen Rücksprung, eine Delle, eine Ausnehmung und/oder eine Einbuchtung aufweisen.

Im dargestellten Ausführungsbeispiel erstreckt sich der Abschnitt 60 auf Höhe der halben Zahnhöhe 28 der Zähne 6 der Zahnriemenscheibe 1, jedoch nicht bis hin zum Kopfkreis 40 und nicht bis hin zum Fußkreis 38 der Zahnriemenscheibe 1. Gemäß anderer Ausgestaltungen kann sich der Abschnitt 60 auch weiter in Richtung größerer Radien der Zahnriemenscheibe 1, insbesondere bis zum Kopfkreis 40 der Zahnriemenscheibe 1 erstrecken. Ebenfalls ist es denkbar, dass sich der Abschnitt 60 in Richtung kleinerer Radien der Zahnriemenscheibe 1, insbesondere bis hin zum Fußkreis 38 der Zahnriemenscheibe 1 erstreckt. In einer weiteren Ausgestaltung kann sich der konkavere Abschnitt 60 vom Fußkreis 38 bis zum Kopfkreis 40 erstrecken.

Wie in Fig. 5 zu sehen ist, kann die Zahnflanke 54 wenigstens eines Bereichs 52, 52a, 52b der asymmetrischen Nut 10 einen Übergang 68 aufweisen, in dem die Zahnflanke 54 von einem konkaven in einen konvexen Verlauf bzw. von einem konvexen Verlauf zu einem konkaven Verlauf wechselt. Am Übergang 68 kann sich die Krümmung 62 der Zahnflanke 54, insbesondere das Vorzeichen der Krümmung 62, ändern. Im in Fig. 5 dargestellten Ausführungsbeispiel weisen die Zahnflanken 54, 54a, 54b beider Bereiche 52, 52a, 52b einen solchen Übergang 68 auf. Die Übergänge 68 der Zahnflanken 54, 54a, 54b beider Bereiche 52, 52a, 52b müssen dabei nicht, wie in Fig. 5 rein beispielhaft gezeigt ist, auf Höhe des gleichen Radius liegen. Vielmehr können die Übergänge 68 der Zahnflanken 54, 54a, 54b auch auf unterschiedlichen Radien angeordnet sein. So kann beispielsweise der Übergang 68 des einen Bereichs 52, 52a näher am Kopfkreis 40 der Zahnriemenscheibe 1 angeordnet sein als ein Übergang 68 des anderen Bereichs 52, 52b.

Die unterschiedlichen Asymmetrien der Nuten 10, die in Zusammenhang mit den Fig. 2 bis 5 der Einfachheit halber getrennt beschrieben sind, können natürlich beliebig miteinander kombiniert sein. Manche Asymmetrien können auch miteinander verbunden sein, so kann beispielsweise eine Asymmetrie in der Krümmung der sich gegenüberliegenden Zahnflanken mit einer Asymmetrie des Abstandes zwischen Zahnflanke 54 und Radialebene 46 auf einem Durchmesser 59 einhergehen.

Im Folgenden ist ein erfindungsgemäßer Riementrieb 70 mit einer Zahnriemenscheibe 1 und einem Zahnriemen 2, wie sie oben beschrieben sind, gemäß möglicher Ausgestaltungen rein exemplarisch beschrieben. Der Riementrieb 70 kann mehr als eine, beispielsweise zwei Zahnriemenscheiben 1 aufweisen. Wenigstens eine Zahnriemenscheibe 1 ist dann erfindungsgemäß ausgestaltet, wobei die wenigstens eine Zahnriemenscheibe 1 insbesondere eine bzw. die abtriebsseitige Zahnriemenscheibe 1 sein kann.

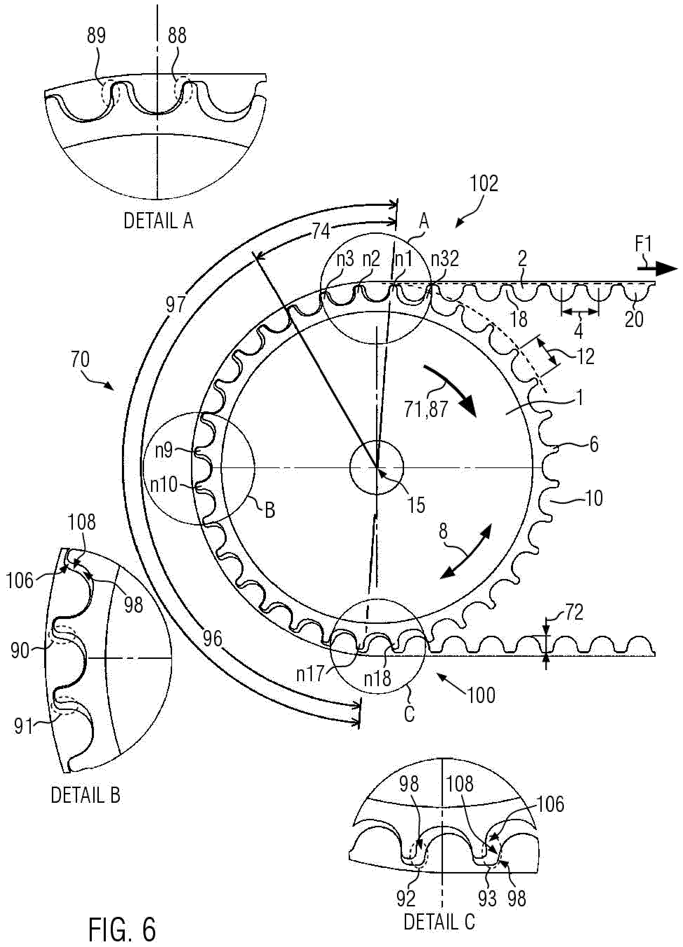

Im in Fig. 6 gezeigten Ausführungsbeispiel weist der Riementrieb 70 die Zahnriemenscheibe 1 und den Zahnriemen 2 auf. Die Teilung 4 des Zahnriemens 2 des Riementriebs 70 ist stets größer als die Teilung 12 der Zahnriemenscheibe 1 bzw. die Teilungen 12 der Zahnriemenscheiben 1. Sind wenigstens zwei Zahnriemenscheiben 1 vorgesehen, so müssen deren Teilungen 12 nicht zwangsläufig identisch sein, solange die Teilung 12 mindestens einer Zahnriemenscheibe 1 kleiner ist als die vorgegebene Teilung 4 des Zahnriemens 2 des Riementriebs 70. Um die Übertragungsleistung der erfindungsgemäß ausgestalteten Zahnriemenscheibe 1 zu erhalten, sollte die Teilung 12 der Zahnriemenscheibe 1 vorzugsweise nicht mehr als 2,5%, jedoch mehr als 0,5% in Relation zur Teilung 4 des Zahnriemens 2 verkleinert sein. Weiter vorzugsweise sollte die Teilung 12 der Zahnriemenscheibe 1 nicht mehr als 2%, jedoch mehr als 1% in Relation zur Teilung 4 des Zahnriemens 2 verkleinert sein.

In der in Fig. 6 dargestellten Ausgestaltung stehen die Zähne 20 des Zahnriemens 2 mit den Zähnen 6 der Zahnriemenscheibe 1 in Eingriff. In manchen Ausgestaltungen kann die Kraft F1 im Zahnriemen 2 die Zahnriemenscheibe 1 in die Rotation 87 versetzen. Unter Last wird dann ein Drehmoment 71 übertragen, so dass die Zähne 20 des Zahnriemens 2 mit den Zähnen 6 der Zahnriemenscheibe 1 drehmomentübertragend in Eingriff stehen. Im vorliegenden Ausführungsbeispiel tauchen die Zähne 20 des Zahnriemens 2 nahezu vollständig, nämlich entlang der gesamten Zahnhöhe 72 der Zähne 20 des Zahnriemens 2 in die Nuten 10 der Zahnriemenscheibe 1 ein. Damit die Zähne 20 des Zahnriemens 2 als mit den Nuten 10 der Zahnriemenscheibe 1 in Eingriff stehend betrachtet sein können, müssen die Zähne 20 des Zahnriemens 2 nicht unbedingt-wie im Ausführungsbeispiel gemäß Fig. 6 - entlang der gesamten Zahnhöhe 72 der Zähne 20 des Zahnriemens 2 in die Nuten 10 der Zahnriemenscheibe 1 eintauchen. So kann es gemäß anderen Ausgestaltungen ausreichen, wenn die Zähne 20 des Zahnriemens 2 um wenigstens etwa 80% der Zahnhöhe 72 der Zähne 20 des Zahnriemens 2 in die Nuten 10 der Zahnriemenscheibe 1 eintauchen. Synonym zu dem Begriff "eintauchen" können die Begriffe "eingreifen", "versenken" oder "eindringen" verwendet sein.

Wie im Detail A in Fig. 6 sichtbar ist, tauchen die ersten, beispielsweise die ersten drei Zähne n1, n2 und n3 der Riemenscheibe 1 vollständig in die Nuten 18 des Zahnriemens 2 ein und übertragen den Hauptteil der Kraft F1 auf die Zahnriemenscheibe 1. Die ersten drei Zähne n1, n2 und n3 sind im dargestellten Ausführungsbeispiel im Bereich einer Auslaufstelle 102 des Riementriebs 70 angeordnet, an der der Zahnriemen 2 aus der Zahnriemenscheibe 1 ausläuft bzw. von dieser wegläuft. Analog weist der Riementrieb 70 auch eine Einlaufstelle 100 auf, an der der Zahnriemen 2 in die Zahnriemenscheibe 1 einläuft.

Da die Kraft F1 relativ gering ist, besitzt der Zahnriemen 2 nur eine kleine Übertragungsfläche 88 am ersten Zahneingriff n1 und ebenso nur eine kleine Übertragungsfläche 89 am zweiten Zahneingriff n2. Aufgrund der unterschiedlichen Teilungen 12, 4 der Zahnriemenscheibe 1 und des Zahnriemens 2 stehen wenige Zähne 6 der Zahnriemenscheibe 1 mit Zähnen 20 des Zahnriemens 2 kraftübertragend in Berührung. Betrachtet man das Detail B aus Fig. 6, so erkennt man, dass die nicht-kraftübertragenden Zahnflanken 106 der Zahnriemenscheibe 1 nicht mehr in Berührung mit den nicht-kraftübertragenden Zahnflanken 108 des Zahnriemens 2 stehen. Es besteht eine sich in Umfangsrichtung 8 erstreckende Lücke 98 zwischen den nicht-kraftübertragenden (aber eigentlich zur Kraftübertragung vorgesehenen) Zahnflanken 108 des Zahnriemens 2 und den nicht-kraftübertragenden (aber eigentlich zur Kraftübertragung vorgesehenen) Zahnflanken 106 der Zahnriemenscheibe 1. Die Übertragungsfläche 90 am neunten Zahneingriff n9 und die Übertragungsfläche 91 am zehnten Zahneingriff n10 stehen nicht unter Flächenpressung. Betrachtet man das Detail C aus Fig. 6, so erkennt man, dass die nicht-kraftübertragenden Zahnflanken 106 der Zahnriemenscheibe 1 auch hier nicht mehr in Berührung mit den nicht-kraftübertragenden Zahnflanken 108 des Zahnriemens 2 stehen, sondern um die Lücke 98 voneinander beabstandet sind. Im Vergleich zu Detail B ist die Lücke 98 zwischen den nicht-kraftübertragenden Zahnflanken 106, 108 noch größer. Die Übertragungsfläche 92 am siebzehnten Zahneingriff n17 und die Übertragungsfläche 93 am achtzehnten Zahneingriff n18 stehen nicht unter Flächenpressung.

Fig. 6 zeigt schematisch eine erfindungsgemäße Ausgestaltung des Riementriebs 70 mit dem Zahnriemen 2 und der getriebenen Riemenscheibe 1, die im Uhrzeigersinn rotiert, wenn auf den Zahnriemen 2 die Kraft F1 aufgebracht wird. In dieser Darstellung wird das Verhalten des Riementriebs 70 dargestellt, wenn nur eine kleine Kraft F1, beispielsweise eine Kraft F1 von 150 bis 300 Newton, auf den Zahnriemen 2 aufgebracht wird. Es finden bei diesen kleinen Kräften F1 keine relevanten Verformungen der Zähne 20 des Zahnriemens 2 statt. Diese relativ geringen Kräfte F1 können problemlos durch nur einige wenige, beispielsweise durch die Zähne n1, n2, n3 übertragen werden.

Die Zähne 20 des Zahnriemens 2 stehen in dieser vorteilhaften Ausführung über einen tragenden Umschlingungswinkel 74 mit den Zähnen 6 der Zahnriemenscheibe 1 kraftübertragend in Eingriff. Aufgrund der Nachgiebigkeit der Zähne 20 des Zahnriemens 2 vergrößert sich der tragende Umschlingungswinkel 74, sobald die Last F1 erhöht wird. So kann die Zahnriemenscheibe 1 in einer vorteilhaften Ausgestaltung derart ausgestaltet sein, dass sich der tragende Umschlingungswinkel 74 bei hohen und sehr hohen Betriebslasten insbesondere bis auf den Wert des Umschlingungswinkel 97 vergrößert. Ohne jegliche aufgeprägte Kraft F1 oder ohne jegliche Vorspannung am Riementrieb 70 kann der tragende Umschlingungswinkel 74 null sein, da nur ein einziger Zahn im Eingriff ist.

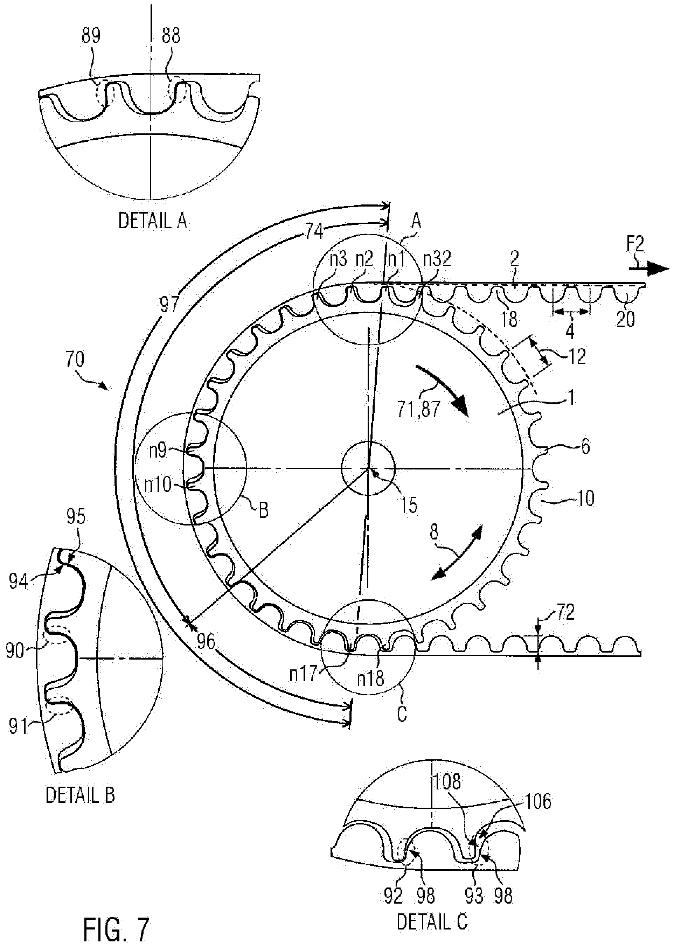

Der Aufbau der in Fig. 7 gezeigten Ausgestaltung des Riementriebs 70 entspricht im Wesentlichen dem Aufbau des Riementriebs 70, der in Fig. 6 gezeigt ist. Allerdings wird der Zahnriemen 2 mit einer Kraft F2 beaufschlagt, die größer ist als die Kraft F1, die auf den Zahnriemen 2 in der Ausgestaltung der Fig. 6 wirkt. Die größere Kraft F2 hat zur Folge, dass der Zahnriemen 2 über einen größeren tragenden Umschlingungswinkel 74 mit den Zähnen 6 der Zahnriemenscheibe 1 kraftübertragend in Eingriff steht als der mit der geringeren Kraft F1 beaufschlagte Zahnriemen 2 des in Fig. 6 gezeigten Ausführungsbeispiels. Wie im Detail A der Fig. 7 zu erkennen ist, stehen die Zähne n1, n2 des Zahnriemens 2 über größere Übertragungsflächen 89, 90 mit den Zähnen 6 der Zahnriemenscheibe 1 kraftübertragendend in Eingriff, als dies im Ausführungsbeispiel gemäß Fig. 6 der Fall ist.

Aus Detail B in Fig. 7 ist ersichtlich, dass die kraftübertragenden Zahnflanken 94 der Zahnriemenscheibe 1 - im Gegensatz zu den in Detail B der Fig. 6 gezeigten nicht-kraftübertragenden Zahnflanken 106, 108 - in Berührung mit den kraftübertragenden Zahnflanken 95 des Zahnriemens 2 stehen. Die Übertragungsfläche 90 am neunten Zahneingriff n9 und die Übertragungsfläche 91 am zehnten Zahneingriff n10 stehen folglich unter Flächenpressung, so dass dort ein Teil der Kraft F2 übertragen wird.

Wie aus Detail C in Fig. 7 hervorgeht, stehen die nicht-kraftübertragenden Zahnflanken 106 der Zahnriemenscheibe 1 - wie die nicht-kraftübertragenden Zahnflanken 106, 108 im Detail C in Fig. 6 - auch im vorliegenden Ausführungsbeispiel nicht in Berührung mit den nicht-kraftübertragenden Zahnflanken 108 des Zahnriemens 2. Insbesondere sind die nicht-kraftübertragenden Zahnflanken 106 der Zahnriemenscheibe 1 von den nicht-kraftübertragenden Zahnflanken 108 des Zahnriemens 2 in Umfangsrichtung 8 um die Lücke 98 beabstandet. Die Übertragungsfläche 92 am siebzehnten Zahneingriff n17 und die Übertragungsfläche 93 am achtzehnten Zahneingriff n18 stehen folglich ebenfalls nicht unter Flächenpressung. Im Vergleich zur in der in Detail C in Fig. 6 dargestellten Ausgestaltung sind die Lücken 98 zwischen den nicht-kraftübertragenden Zahnflanken 106, 108 jedoch kleiner. Weiter ist der tragende Umschlingungswinkel 74 im Vergleich zum Ausführungsbeispiel der Fig. 6 größer und ein nicht tragender Umschlingungswinkel 96 kleiner. In dem in Fig. 7 gezeigten Ausführungsbeispiel erstreckt sich im Vergleich zu Fig. 6 der tragende Umschlingungswinkel 74 weiter entlang der Umfangsrichtung 8 der Zahnriemenscheibe 1. In dieser beispielhaften Ausgestaltung kann der Zahnriemen 2 bei durchhängendem Leertrum auch unter hohen Lasten ohne Eingriffsstörung in die Riemenscheibe 1 einlaufen.

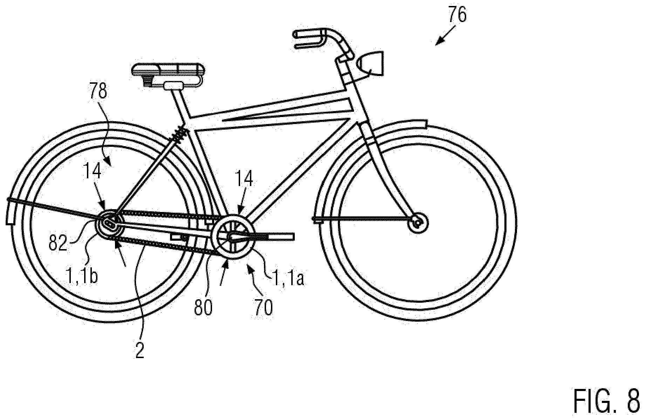

Im Folgenden ist kurz ein erfindungsgemäßes Fahrrad 76 gemäß einem möglichen Ausführungsbeispiel mit Bezug auf Fig. 8 beschrieben. Das dargestellte Fahrrad 76 weist einen gefederten Hinterbau 78 und den erfindungsgemäßen Riementrieb 70 gemäß einer möglichen Ausgestaltung auf. Der Riementrieb 70 weist zwei Zahnriemenscheiben 1 auf, die mit dem Zahnriemen 2 in Eingriff stehen. Die Zahnriemenscheiben 1 können voneinander unterschiedliche Kopfkreisdurchmesser 14 aufweisen. Die Teilungen 12 der Zahnriemenscheiben 1 sind jeweils kleiner als die Teilung 4 des Zahnriemens 2 (unterschiedliche Teilungen 4, 12 nicht zu erkennen in Fig. 8).

Eine vordere Zahnriemenscheibe 1, 1a ist im dargestellten Ausführungsbeispiel an einem Tretlager 80 des Fahrrads 76 angeordnet. Die vordere Zahnriemenscheibe 1, 1a kann am Tretlager 80 angetrieben sein und beispielsweise mit einem durch Muskelkraft und/oder motorisch erzeugten Antriebsdrehmoment beaufschlagt sein. Eine hintere Zahnriemenscheibe 1, 1b kann, wie in Fig. 8 weiter zu sehen ist, im Bereich einer Hinterradnabe 82 des Fahrrads 76 angeordnet sein.

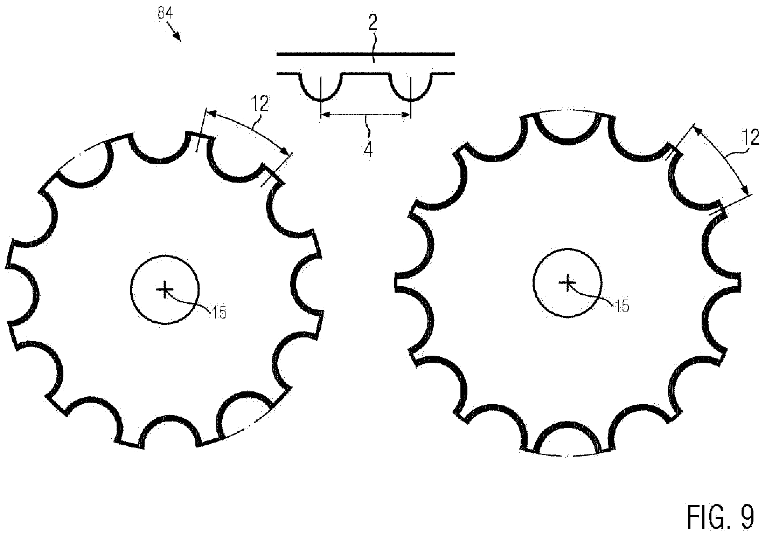

Abschließend ist kurz und rein exemplarisch ein Bausatz 84 für einen Riementrieb 70 mit Bezug auf Fig. 9 beschrieben. Der Bausatz 84 umfasst beispielsweise zwei Zahnriemenscheiben 1. Gemäß anderen Ausgestaltungen kann der Bausatz 84 jedoch auch mehr als zwei, beispielsweise drei oder vier Zahnriemenscheiben 1 aufweisen. Die Zahnriemenscheiben 1 des Bausatzes 84 sind zur Verwendung mit demselben Zahnriemen 2 vorgegebener Teilung 4 oder einem dazu baugleichen Zahnriemen 2 ausgestaltet.

Die Zahnriemenscheiben 1 weisen jeweils unterschiedliche Zähnezahlen und Kopfkreisdurchmesser 14 auf. Beide Zahnriemenscheiben 1 weisen zudem eine Teilung 12 auf, die jeweils kleiner ist als die vorgegebene Teilung 4 des Zahnriemens 2. Die Teilungen 12 der Zahnriemenscheiben 1 müssen dabei nicht, wie im in Fig. 9 gezeigten Ausführungsbeispiel, gleich sein. So können die Teilungen 12 der Zahnriemenscheiben 1 des Bausatzes 84 auch voneinander verschieden sein, solange die Teilungen 12 der Zahnriemenscheibe 1 jeweils kleiner sind als die vorgegebene Teilung 4 des Zahnriemens 2. Beispielsweise kann die Teilung der Zahnriemenscheiben 1 von der Zähnezahl abhängen. Ebenso kann die Nutform der Zahnriemenscheiben 1 von der Zähnezahl abhängen.

Mit einem solchen Bausatz 84 lässt sich beispielsweise die Übersetzung des Riementriebs 70 verändern.

### Bezugszeichen

- 1: Zahnriemenscheibe
- 1a: vordere Zahnriemenscheibe
- 1b: hintere Zahnriemenscheibe
- 2: Zahnriemen
- 4: Teilung des Zahnriemens
- 6: Zähne der Zahnriemenscheibe
- 8: Umfangsrichtung
- 10: Nuten der Zahnriemenscheibe
- 12: Teilung der Zahnriemenscheibe
- 14: Kopfkreisdurchmesser der Zahnriemenscheibe
- 15: Mittelpunkt
- 16: durch Profilgeometrie vorgegebener Kopfkreisdurchmesser
- 18: Nuten des Zahnriemens, Zahnriemennuten
- 20: Zähne des Zahnriemens, Zahnriemenzähne
- 22: durch Profilgeometrie vorgegebene Zähne
- 24: Breite der Zähne der Zahnriemenscheibe
- 26: durch Profilgeometrie vorgegebene Breite der Zähne
- 28: Zahnhöhe der Zähne der Zahnriemenscheibe
- 30: durch Profilgeometrie vorgegebene Breite der Nuten
- 32: Radialrichtung
- 34: Zahnfuß
- 36: Zahnkopf
- 38: Fußkreis
- 40: Kopfkreis
- 42: Breite der Nuten
- 44: kleinster Radius bzw. Durchmesser
- 46: Radialebene
- 48: Stelle
- 50: Scheitelpunkt
- 52: Bereiche
- 52a: der eine Bereich
- 52b: der andere Bereich
- 54: Zahnflanke
- 54a: erste Zahnflanke
- 54b: zweite Zahnflanke
- 56: Abschnitt mit unterschiedlichen Steilheiten
- 57: Breite
- 58: Abschnitt mit unterschiedlichen Breiten
- 59: Durchmesser
- 60: Abschnitt mit unterschiedlich konkaven Zahnflanken
- 62: Krümmung
- 64: Krümmungsradius
- 66: Vertiefung
- 68: Übergang
- 70: Riementrieb
- 71: Drehmoment
- 72: Zahnhöhe der Zähne des Zahnriemens
- 74: tragender Umschlingungswinkel
- 76: Fahrrad
- 78: gefederter Hinterbau
- 80: Tretlager
- 82: Hinterradnabe
- 84: Bausatz
- 85: Wirklinie
- 86: Wirkkreisdurchmesser
- 87: Rotation
- 88: Übertragungsfläche am ersten Zahneingriff
- 89: Übertragungsfläche am zweiten Zahneingriff
- 90: Übertragungsfläche am neunten Zahneingriff
- 91: Übertragungsfläche am zehnten Zahneingriff
- 92: Übertragungsfläche am siebzehnten Zahneingriff
- 93: Übertragungsfläche am achtzehnten Zahneingriff
- 94: kraftübertragende Zahnflanke der Zahnriemenscheibe
- 95: kraftübertragende Zahnflanke des Zahnriemens
- 96: nicht tragender Umschlingungswinkel
- 97: Umschlingungswinkel
- 98: Lücke
- 100: Einlaufstelle
- 102: Auslaufstelle
- 103: Riemenlauffläche
- 104: Riemenrücken
- 105: Zugstrang
- 106: nicht-kraftübertragende Zahnflanke der Zahnriemenscheibe
- 108: nicht-kraftübertragende Zahnflanke des Zahnriemens
- F1, F2: Kräfte
- n1, n2, n3, ...: erster, zweiter, dritter, ... Zahn
- u: Wirklinienabstand

## Patentansprüche

1. Zahnriemenscheibe (1) für einen Zahnriemen (2) mit einer vorgegebenen Teilung (4), wobei die Zahnriemenscheibe (1) entlang einer Umfangsrichtung (8) der Zahnriemenscheibe (1) angeordnete Zähne (6) sowie in Umfangsrichtung (8) zwischen jeweils benachbarten Zähnen (6) der Zahnriemenscheibe (1) angeordnete Nuten (10) aufweist, und wobei die Zahnriemenscheibe (1) eine Teilung (12) aufweist, die kleiner ist als die Teilung (4) des Zahnriemens (2).

2. Zahnriemenscheibe nach Anspruch 1, wobei die Teilung (12) der Zahnriemenscheibe (1) um wenigstens 0,5% und höchstens 2,5% der Teilung (4) des Zahnriemens (2) kleiner ist als die Teilung (4) des Zahnriemens (2).

3. Zahnriemenscheibe (1) nach Anspruch 1 oder 2,
wobei die Zahnriemenscheibe (1) einen Kopfkreisdurchmesser (14) aufweist, der kleiner ist als der durch die Profilgeometrie des Zahnriemens (2) vorgegebene Kopfkreisdurchmesser (16).

4. Zahnriemenscheibe (1) nach einem der Ansprüche 1 bis 3,
wobei die Zähne (6) der Zahnriemenscheibe (1) wenigstens abschnittsweise entlang der Umfangsrichtung (8) schmaler sind als durch die Profilgeometrie des Zahnriemens (2) vorgegebene Zähne (22).

5. Zahnriemenscheibe (1) nach einem der Ansprüche 1 bis 4,
wobei die Nuten (10) der Zahnriemenscheibe (1) eine Breite (42) in Umfangsrichtung (8) aufweisen, die wenigstens im Bereich der Zahnfüße (34) der Zähne (6) der Zahnriemenscheibe (1) größer ist als eine durch die Profilgeometrie des Zahnriemens (2) vorgegebene Breite (30) der Nuten (10).

6. Zahnriemenscheibe (1) nach einem der Ansprüche 1 bis 5,
wobei wenigstens eine Nut (10) der Zahnriemenscheibe (1) jeweils bezüglich einer durch die auf dem kleinsten Durchmesser liegende Stelle (48) der jeweiligen Nut (10) verlaufenden Radialebene (46) asymmetrisch ist und wobei die Radialebene (46) die wenigstens eine Nut (10) in zwei Bereiche (52, 52a, 52b) teilt.

7. Zahnriemenscheibe (1) nach Anspruch 6,
wobei die Zahnflanken (54, 54a, 54b) in den beiden Bereichen (52, 52a, 52b) bezüglich der Radialebene (46) in wenigstens einem Abschnitt (56) unterschiedlich steil verlaufen.

8. Zahnriemenscheibe (1) nach Anspruch 6 oder 7,
wobei die Bereiche (52, 52a, 52b) der wenigstens einen Nut (10) in wenigstens einem Abschnitt (58) in Umfangsrichtung (8) unterschiedlich breit sind.

9. Zahnriemenscheibe (1) nach einem der Ansprüche 6 bis 8,
wobei die Zahnflanken (54, 54a, 54b) in den beiden Bereichen (52, 52a, 52b) der wenigstens einen Nut (10) in wenigstens einem Abschnitt (60) unterschiedlich konkav geformt sind.

10. Zahnriemenscheibe (1) nach Anspruch 9,
wobei sich der wenigstens eine Abschnitt (60) auf Höhe einer mittleren Zahnhöhe (28) der Zähne (6) der Zahnriemenscheibe (1) erstreckt.

11. Zahnriemenscheibe (1) nach Anspruch 9 oder 10,
wobei sich der wenigstens eine Abschnitt (60) weiter in Richtung größerer Radien der Zahnriemenscheibe (1) erstreckt.

12. Riementrieb (70) für ein Fahrrad (76),
mit wenigstens einer Zahnriemenscheibe (1) und mit einem Zahnriemen (2), wobei eine Teilung (4) des Zahnriemens (2) größer ist als eine Teilung (12) der Zahnriemenscheibe (1).

13. Riementrieb (70) nach Anspruch 12,
wobei der Riementrieb (70) eine Einlaufstelle (100), an der der Zahnriemen (2) in die Zahnriemenscheibe (1) einläuft, und eine Auslaufstelle (102), an der der Zahnriemen (2) aus der Zahnriemenscheibe (1) ausläuft, aufweist, wobei sich eine Lücke (98) zwischen den in Umfangsrichtung (8) zur Einlaufstelle (100) weisenden Zahnflanken (94) der Zahnriemenscheibe (1) und den diesen Zahnflanken (94) gegenüberliegenden, in Umfangsrichtung (8) zur Auslaufstelle (102) weisenden Zahnflanken (95) des Zahnriemens (2) von der Einlaufstelle (100) zur Auslaufstelle (102) verkleinert.

14. Riementrieb (70) nach Anspruch 12 oder 13,
wobei ein Flankenspiel zwischen den Zähnen (20) des Zahnriemens (2) und den Zähnen (6) der Zahnriemenscheibe (1) größer ist als ein Flankenspiel zwischen den Zähnen (20) des Zahnriemens (2) und den Zähnen (6) einer durch die Profilgeometrie des Zahnriemens (2) vorgegebenen Zahnriemenscheibe.

15. Fahrrad (76), insbesondere Elektrofahrrad, wobei das Fahrrad (76) eine Zahnriemenscheibe (1) nach einem der Ansprüche 1 bis 11 und/oder einen Riementrieb (70) nach einem der Ansprüche 12 bis 14 aufweist.

16. Fahrrad (76) nach Anspruch 15, wobei eine Zahnriemenscheibe (1) im Bereich eines Tretlagers (80) des Fahrrads (76) angeordnet ist und/oder wobei eine Zahnriemenscheibe (1) im Bereich einer Radnabe (82) des Fahrrads (76) angeordnet ist.

17. Fahrrad (76) nach Anspruch 15 oder 16,
wobei das Fahrrad (76) einen gefederten Hinterbau (78) aufweist.

18. Bausatz (84) für einen Riementrieb (70), mit wenigstens zwei Zahnriemenscheiben (1) nach einem der Ansprüche 1 bis 11 für Zahnriemen (2) derselben vorgegebenen Teilung (4) und Verzahnungsgeometrie, wobei die Zahnriemenscheiben (1) unterschiedliche Zähnezahlen und unterschiedliche Kopfkreisdurchmesser (14) aufweisen, und wobei die Zahnriemenscheiben (1) jeweils eine Teilung (12) aufweisen, die jeweils kleiner ist als die Teilung (4) des Zahnriemens (2).

19. Riementrieb (70) nach einem der Ansprüche 12 bis 14 zur Übertragung einer Kraft (F1, F2) oder eines Drehmomentes von einem treibenden Zahnriemen (2) auf eine angetriebene Zahnriemenscheibe (1), insbesondere für ein Zweirad, mit
- Zahnflanken (95, 108) des treibenden Zahnriemens (2), die im Betrieb in kämmende Verbindung mit einer angetriebenen Zahnriemenscheibe (1) treten können,
- Zahnflanken (94, 106) der angetriebenen Zahnriemenscheibe (1), die im Betrieb in kämmende Verbindung mit dem treibenden Zahnriemen (2) treten können,
- einer Kraft (F1, F2), die vom Lasttrum des treibenden Zahnriemens (2) über die Zahnflanken (95) des treibenden Zahnriemens (2) auf die Zahnflanken (94) der angetriebenen Zahnriemenscheibe (1) übertragen wird,
wobei sich innerhalb der kämmenden Verbindung eine Anzahl an kraftübertragenden Zahnflanken (95) des treibenden Zahnriemens (2) und Zahnflanken (94) der angetriebenen Zahnriemenscheibe (1) paarweise gegenüberliegen und in Berührung stehen, und
wobei sich innerhalb der kämmenden Verbindung eine Anzahl an nicht-kraftübertragenden Zahnflanken (108) des treibenden Zahnriemens (2) und nicht-kraftübertragenden Zahnflanken (106) der angetriebenen Zahnriemenscheibe (1) paarweise gegenüberliegen und nicht in Berührung stehen,
wobei der Riementrieb (2) während des Betriebs
in einen wenig belasteten Zustand, in dem die Kraft (F1, F2) einen niedrigen Wert besitzt, in dem der Riementrieb (70) eine kleine Anzahl an kraftübertragenden Zahnflanken (94, 95) und eine große Anzahl an nicht-kraftübertragenden Zahnflanken (106, 108) aufweist, und
in wenigstens einen Zwischenzustand, in dem die Kraft (F1, F2) einen mittleren Wert besitzt, in dem der Riementrieb (70) eine mittlere Anzahl an kraftübertragenden Zahnflanken (94, 95) und eine mittlere Anzahl an nicht-kraftübertragenden Zahnflanken (106, 108) aufweist, und
in einen hoch belasteten Zustand, in dem die Kraft (F1, F2) einen hohen Wert besitzt, in dem der Riementrieb (70) eine hohe Anzahl an kraftübertragenden Zahnflanken (94, 95) und eine kleine Anzahl an nicht-kraftübertragenden Zahnflanken (106, 108) aufweist,
bringbar ist.
